# FASCICULE DE BREVET EUROPEEN

(11) **EP 3 732 384 B1**
(45) Date de publication et mention de la délivrance du brevet: **28.06.2023**
(21) Numéro de dépôt: 18845402.9
(22) Date de dépôt: 28.12.2018
(51) Int. Cl.: F16H 57/08

(54) **PORTE-SATELLITES POUR UN RÉDUCTEUR DE VITESSE A TRAIN ÉPICYCLOÏDAL**
PLANETENTRÄGER FÜR EIN EPIZYKLISCHES UNTERSETZUNGSGETRIEBE
PLANET CARRIER FOR AN EPICYCLIC SPEED REDUCTION GEAR

(30) Priorité: 29.12.2017 FR 1763349
(43) Date de publication de la demande: 04.11.2020
(73) Titulaire: Safran Transmission Systems, 92700 Colombes (FR)
(72) Inventeur: RAPPAPORT, Florian, 77550 MOISSY-CRAMAYEL (FR); DI GIOVANNI, Jean-Charles, Michel, Pierre, 77550 MOISSY-CRAMAYEL (FR); DOMBEK, Alexis, Claude, Michel, 77550 MOISSY-CRAMAYEL (FR)
(74) Mandataire: Gevers & Orès
(86) Numéro de dépôt international: PCT/FR2018/053563
(87) Numéro de publication internationale: WO 2019/130006

(56) Documents cités:
- EP-A1- 1 186 804
- EP-A1- 2 677 209
- CN-U- 201 747 802
- US-A1- 2005 192 152
- US-A1- 2017 016 528

## Description

### DOMAINE TECHNIQUE

La présente invention concerne un porte-satellites pour un réducteur à train épicycloïdal, en particulier pour une turbomachine d'aéronef.

### ÉTAT DE LA TECHNIQUE

L'état de la technique comprend notamment les documents EP-A1-2 677 209, EP-A1-1 186 804, US-A1-2005/192152 et CN-U-201 747 802.

Un réducteur mécanique a pour but de modifier le rapport de vitesse et/ou le couple entre l'axe d'entrée et l'axe de sortie d'un mécanisme.

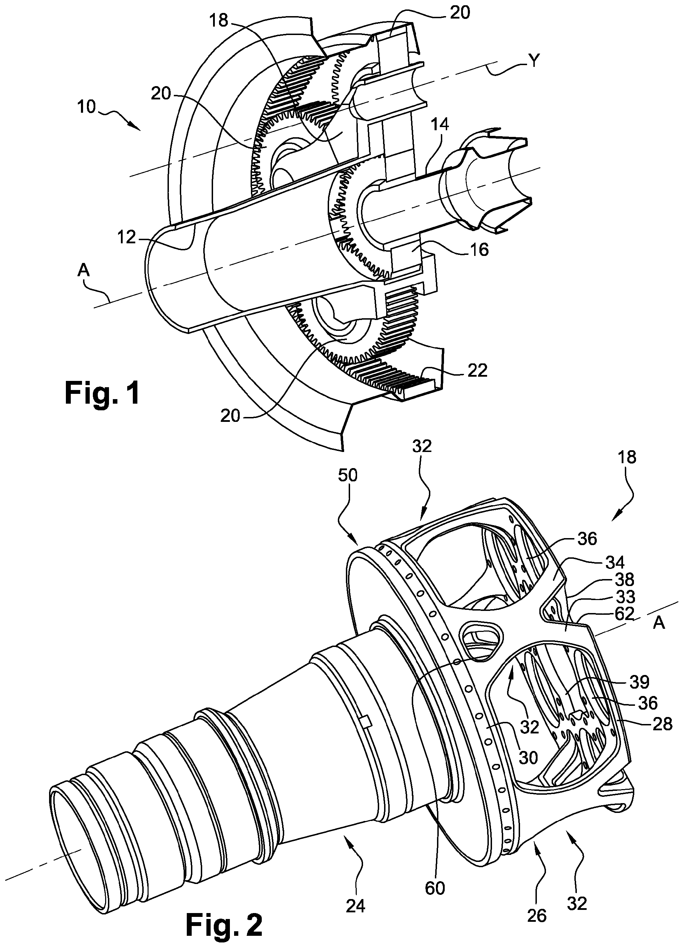

De manière classique, les turbomachines à double flux, notamment celles ayant un haut taux de dilution, comportent un réducteur mécanique à train épicycloïdal 10 (voir figure 1) pour entraîner l'arbre 12 d'une soufflante (non représentée). De manière usuelle, le réducteur à train épicycloïdal 10 a pour but de transformer la vitesse de rotation dite rapide de l'arbre d'une turbine de puissance 14 en une vitesse de rotation plus lente pour l'arbre 12 entraînant la soufflante.

De manière classique, un réducteur à train épicycloïdal 10 comporte (par rapport à l'axe longitudinal A de la turbomachine autour duquel tourne notamment l'arbre de la turbine de puissance 14) :
- un pignon solaire 16, sous la forme d'une roue dentée qui est assemblé avec l'arbre de turbine 14, par exemple avec une liaison cannelée. Ce pignon solaire 16 tourne dans un sens de rotation en entraînant le réducteur 10,
- un porte-satellites 18 portant des satellites 20 par l'intermédiaire de paliers, de manière à tourner autour d'axes Y parallèles à l'axe longitudinal A, les satellites 20 étant formés par des roues dentées s'engrenant autour du pignon solaire 16, et le porte-satellites 18 pouvant être fixé à un stator par l'intermédiaire de paliers ou roulements. De plus, le porte-satellite tourne autour de l'axe A,
- une couronne externe dentée 22, qui s'engrène avec les satellites 20 et qui peut être maintenue fixe par rapport à la structure de la turbomachine (un stator).

En particulier, le porte-satellites 18 est une des pièces centrales du réducteur 10, supportant les axes paliers ainsi que les satellites 20. Il a notamment pour fonction d'assurer de bonnes conditions de support pour les satellites 20 du réducteur épicycloïdal 10, et de les mettre en rotation autour de l'axe A. Une des exigences majeures liées à un porte-satellites 18 est de maintenir les satellites 20 alignés, malgré les déformations subies par le porte-satellite 18 qui est fortement sollicité, et également de ne pas rompre en cas de charge ultime. Un désalignement des satellites 20 peut notamment provoquer une usure prématurée des engrenages et du réducteur de vitesse 10.

Le porte-satellites 18 est classiquement une pièce en acier, titane ou autre alliage métallique massive et donc lourde. Le porte-satellites peut être amélioré sur plusieurs aspects, tels que le désalignement des axes des paliers des satellites, la tenue aux efforts, la masse, la complexité de fabrication, etc. Le critère de désalignement est considéré comme le plus important car il impacte la fiabilité, la durée de vie et le rendement du réducteur.

Ainsi, l'objectif de la présente demande est de proposer un porte-satellites capable de supporter les charges appliquées tout en maintenant les satellites alignés, et en restant le plus léger possible.

Dans le document FR-A1-3 011 901, la demanderesse a proposé un porte-satellites 5 de réducteur qui comporte une cage 7 dont les flancs 9, 10 sont reliés par des pontets 16 droits, c'est-à-dire alignés avec l'axe longitudinal A du réducteur. Le flanc 9 situé du côté de l'organe de sortie de couple 8 peut être conformé pour diminuer le désalignement apparaissant au niveau des axes des satellites. La fabrication de cette architecture est toutefois complexe à cause d'évidements peu accessibles et très profonds.

Une solution pour améliorer cette situation serait d'utiliser un porte-satellites dont les flancs de la cage seraient reliés par des pontets formés de barres entrecroisées. Ceci permettrait de faciliter la fabrication du porte-satellites et de l'alléger mais ne permettrait pas de diminuer de manière suffisante le désalignement des axes des satellites.

L'invention apporte donc une solution à ce problème.

### EXPOSÉ DE L'INVENTION

L'invention propose à cet effet un porte-satellites selon la revendication 1.

L'invention représente un compromis entre les technologies antérieures et permet de bénéficier de leurs avantages, sans leurs inconvénients. Les pontets en X permettent une meilleure accessibilité pour la fabrication et pour la maintenance du porte-satellites. En effet, comme l'architecture de la cage est plus ouverte par rapport aux porte-satellites de l'état de la technique, ceci permet par exemple de réaliser des opérations de fraisage depuis l'extérieur de la cage et facilite des contrôles endoscopiques.

Les contraintes dans la pièce et le désalignement des satellites par rapport à l'axe A sont en outre réduits grâce à la gorge annulaire continue de la cage, qui « isole » la cage de l'organe de transmission et donc limite la transmission de contraintes de l'un à l'autre, notamment pour ce qui est du passage du couple, et permet à la cage d'avoir une symétrie de révolution, afin de réduire sa sensibilité aux efforts centrifuges. Cette symétrie permet de réduire le désalignement des axes des paliers de satellites en présence d'un champ centrifuge. Ces caractéristiques permettent de conférer au porte-satellites une rigidité équilibrée.

Le porte-satellites selon l'invention peut comprendre une ou plusieurs des caractéristiques suivantes, prises isolément les unes des autres ou en combinaison les unes avec les autres, si cela est permis par les revendications adjointes :
- chaque pontet comprend au moins deux barres entrecroisées,
- les deux barres de chaque pontet s'entrecroisent dans une zone située à proximité de l'un des flancs ou avantageusement à mi-distance des flancs ; cette position permet de réduire les contraintes dans les pontets,
- ledit anneau a en demi section axiale une forme en U et comprend deux parois annulaires coaxiales et parallèles et reliées à leur périphérie externe par une paroi cylindrique ; cette forme en U définit ladite gorge ; cette forme dite de « rigidité équilibrée » permet de diminuer le désalignement vu par les axes des satellites,
- une première desdites parois annulaires forme un desdits flancs et l'autre desdites parois annulaires est reliée audit organe ; les flancs de la cage sont ainsi isolées de l'organe de transmission du réducteur,
- ladite paroi cylindrique comprend une rangée annulaire d'orifices traversants ; ces orifices permettent d'évacuer de l'huile et d'éviter de former un balourd à cause d'huile piégée par la centrifugation, due à la rotation du porte-satellite,
- ladite paroi cylindrique comprend un cordon annulaire d'équilibrage qui est formé en saillie sur sa surface cylindrique externe ; ceci est avantageux pour faciliter la correction du balourd du porte-satellites, par usinage de ce cordon,
- ladite surface cylindrique externe est la surface cylindrique externe de plus grand diamètre de ladite paroi cylindrique ; cela permet de corriger un balourd avec le moins d'enlèvement de matière possible,
- ledit anneau a un diamètre interne égal à un diamètre interne d'un alésage interne dudit organe, ou lesdites parois annulaires ont un diamètre interne égal au diamètre interne dudit alésage,
- chacun desdits pontets définit entre ses barres deux espaces triangulaires ou trapézoïdaux disposés tête bêche, un premier desdits espaces étant situé du côté dudit anneau et comportant une base définie par ledit anneau, et un second desdits espaces étant situé du côté opposé et comportant une base ouverte axialement vers ce côté,
- ledit second espace communique avec une première encoche prévue à la périphérie externe du flanc opposé audit organe, cette première encoche ayant une forme générale en V dont la pointe est orientée radialement vers l'axe et orientée vers la pointe d'une seconde encoche en V disposée de manière tête bêche à la périphérie interne du même flanc,
- l'épaisseur radiale des pontets varie axialement et est maximale au niveau de leur liaison auxdits flancs.

L'invention concerne également un réducteur de vitesse à train épicycloïdal comportant un porte-satellites comme évoqué ci-dessus. L'invention concerne encore une turbomachine d'aéronef, comportant un réducteur à train épicycloïdal comme évoqué ci-dessus.

### BRÈVE DESCRIPTION DES FIGURES

D'autres caractéristiques et avantages de l'invention apparaîtront à la lecture de la description détaillée d'exemples de réalisation ci-après, en référence aux figures annexées qui représentent, respectivement :
- la figure 1 est une vue schématique en perspective et en coupe d'un réducteur à train épicycloïdal classique,
- la figure 2 est une vue schématique en perspective d'un porte-satellites selon l'invention,
- la figure 3 est une vue schématique partielle en coupe axiale du porte-satellites de la figure 2, et montre des dimensions,
- les figures 4a et 4b sont des vues schématiques partielles de face d'un flanc de la cage du porte-satellites de la figure 2,
- les figures 5a à 5c sont des vues schématiques de côté de la cage du porte-satellites de la figure 2, et montrent d'autres dimensions,
- les figures 6a et 6b sont des vues schématiques en coupe du porte-satellites obtenu suite à tournage et avant son usinage en particulier pour la réalisation des pontets, et montrent d'autres dimensions, et
- les figures 7a et 7b sont des vues similaires aux figures 3 et 4, et montrent d'autres dimensions.

### DESCRIPTION DETAILLÉE D'UN MODE DE RÉALISATION

Comme mentionné ci-dessus, la figure 1 illustre la structure générale d'un réducteur de vitesse à train épicycloïdal 10. Lors du fonctionnement du train épicycloïdal 10, le couple transmis au travers du réducteur 10 étant important, ceci peut provoquer une déformation du porte-satellites 18 et mener à un désalignement des axes des satellites 20. Par ailleurs, les forces centrifuges peuvent également générer une déformation du porte-satellites 20, pouvant là encore causer un désalignement des satellites 20. Comme indiqué précédemment, il est indispensable que le porte-satellites 18 maintienne le bon positionnement des satellites 20, malgré les déformations subies par le porte-satellites 18 en fonctionnement.

Comme visible sur la figure 2, le porte-satellites 18 selon l'invention s'étend le long de l'axe A et comporte deux parties : un organe de transmission de couple d'axe 24 longitudinal A et une cage annulaire 26 s'étendant autour de l'axe A. La cage annulaire 26 est reliée à une extrémité longitudinale de l'organe 24. L'organe 24 est tubulaire et s'étend axialement (selon l'axe A). Il a une forme générale cylindrique ou tronconique, dont une extrémité longitudinale est prolongée par une partie de liaison annulaire et destinée à faire le lien avec l'arbre de turbine 14 (voir figure 1). Ainsi, l'extrémité longitudinale avant de l'organe 24 est reliée à la cage 26 et l'extrémité arrière qui comporte une denture est destinée à être engrainée avec l'arbre de turbine 14.

L'avant est défini comme étant du côté de la soufflante et l'arrière est défini comme étant du côté de la tuyère d'échappement de la turbomachine.

**La** cage annulaire 26 comporte deux flancs 28, 30 s'étendant radialement par rapport à l'axe A, respectivement un flanc avant 28 et un flanc arrière 30. Le flanc avant 28 est défini comme le flanc situé du côté opposé de l'organe de transmission 24 et le flanc arrière 30 est défini comme celui solidaire de l'organe 24. Les deux flancs 28, 30 sont reliés entre eux par des pontets 32. Comme illustré sur les figures 2 et suivantes, chaque pontet 32 comprend deux bras ou barres entrecroisées 33, 34 et présente donc une forme générale de X. Chaque barre 33, 34 est ainsi découpée en deux parties correspondantes 33a, 33b, 34a, 34b alignées et s'étendant de part et d'autre du croisement (ou zone de croisement) du X. Dans l'exemple représenté, les deux barres correspondantes 33, 34 de chaque pontet 32 s'entrecroisent dans une zone située à proximité de l'un des flancs 28, 30, ou avantageusement à mi-distance des flancs.

Selon le mode de réalisation présenté, les flancs 28, 30 et les pontets 32 sont formés d'une seule pièce. Ceci permet que le porte-satellites 18 forme un seul ensemble structurel, éliminant de fait les problèmes liés à l'assemblage de plusieurs pièces par l'intermédiaire d'organes de liaison additionnels. Ceci permet notamment d'éviter les problèmes liés au balourd généré par les tolérances d'assemblage, les problèmes de montage ou encore la masse supplémentaire due à la multiplication des pièces.

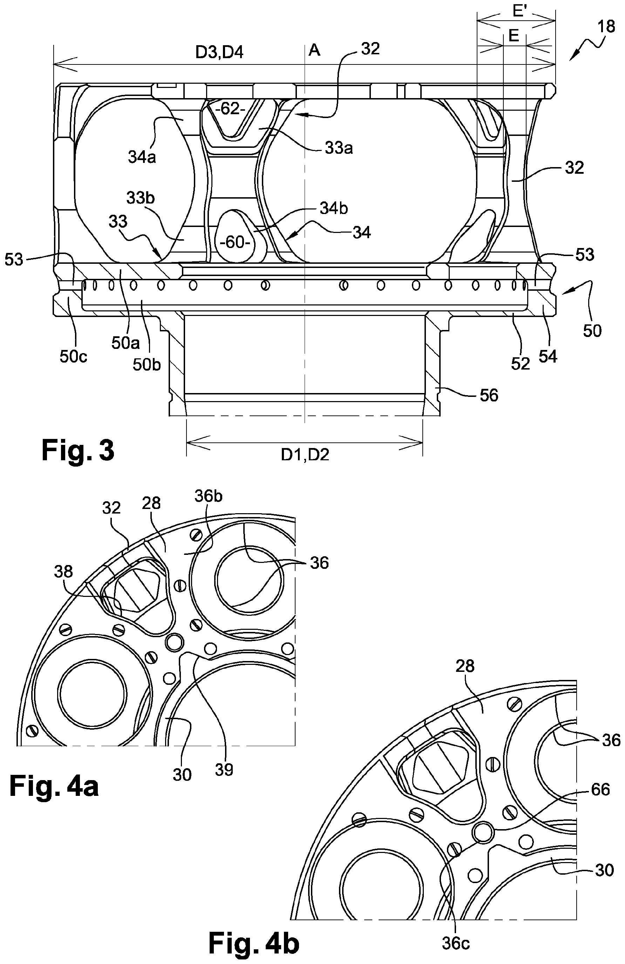

Comme illustré sur les figures 4a et 4b notamment, les flancs avant 28 et arrière 30 comportent chacun des trous servant chacun au montage d'une extrémité d'un axe de satellite 20 (figure 1) et formant ainsi des sièges 36 pour les satellites 20. Ces sièges 36 s'étendent ainsi axialement (selon l'axe A) entre les flancs 28, 30 et sont destinés à supporter les satellites 20 montés de façon rotative autour des sièges 36.

Comme visible sur les figures 2 et 4a, 4b, au moins l'un des flancs 28, 30, en l'occurrence le flanc avant 28 comprend, entre deux sièges 36 adjacents, au moins une ou deux encoches 38, 39. Dans l'exemple représenté, les encoches sont alignées avec un pontet 32 selon un plan passant par l'axe A mais, en variante, elles pourraient être agencées différemment. Chaque encoche 38 est située à la périphérie externe du flanc 28, entre les barres correspondantes 33, 34 de chaque pontet 32, et présente une forme générale en U ou V dont l'ouverture est orientée radialement vers l'extérieur par rapport à l'axe A. Chaque encoche 39 est située à la périphérie interne du flanc 28 et présente une forme générale en U ou V. Ces encoches 38, 39 sont disposées tête bêche de sorte que leurs pointes ou fonds soient orientés l'un(e) vers l'autre.

De manière connue en soi, lors du fonctionnement du train réducteur 10, un premier chemin d'efforts traverse le flanc arrière 30 (partant des extrémités correspondantes des sièges 36 des satellites 20) puis l'organe de transmission de couple 24. Un second chemin d'efforts traverse le flanc avant 28 (des extrémités correspondantes des sièges 36 des satellites 24 jusqu'aux zones de liaison entre le flanc avant 28 et les pontets 32), les pontets 32 puis l'organe de transmission de couple 24.

La cage 26 qui supporte les axes des paliers (selon les axes Y) et donc les satellites 20 est ainsi conformée avec les barres 33, 34 entrecroisées pour obtenir des « treillis » ou « croisillons ». Ceci permet le bon passage des efforts nécessaires au fonctionnement du train réducteur 10 avec un minimum de matière. La présente invention présente donc une solution qui optimise la masse du réducteur 10 sans gêner le passage des efforts entre les flancs 28, 30 et en limitant le désalignement des satellites 20.

Cette optimisation est notamment obtenue grâce à l'inclinaison particulière des barres 33, 34 des pontets 32. En effet, les barres 33, 34 des pontets 32 sont chacune découpées en deux parties : une partie arrière (proche du flanc arrière 30) et une partie avant (proche du flanc avant 28). Les parties arrière 33b, 34b et avant 33a, 34a de chaque barre 33, 34 se rejoignent au croisement du X formé par chaque pontet 32. La particularité de l'invention est que, de même que les barres correspondantes 33, 34 entre elles, les parties arrière 33b, 34b et avant 33a, 34a de chaque barre 33, 34 de chaque pontet 32 ne s'étendent pas dans le même plan et forment un angle différent de 0 entre elles. Ainsi, chaque pontet 32 comprend des barres 33, 34 qui sont chacune inclinées par rapport à un plan longitudinal passant par l'axe A et sensiblement par la barre 33, 34 correspondante. Cette différence d'inclinaison des barres 33, 34 entre elles et des différentes parties 33a, 34a, 33b, 34b entre elles permet de rigidifier le porte-satellites 26 en torsion autour de l'axe A lors du fonctionnement de la turbomachine, et donc de limiter les désalignements des axes satellites par rapport à l'axe A, lorsque des efforts dus à la torsion transitent dans le porte-satellites.

Selon une autre caractéristique de l'invention, les pontets 32 sont reliés à l'organe par un anneau 50 s'étendant autour de l'axe A et comportant une gorge annulaire interne 52 continue visible à la figure 3.

Dans l'exemple représenté, l'anneau 50 a en demi section axiale une forme sensiblement en U et comprend deux parois annulaires 50a, 50b sensiblement coaxiales et parallèles et reliées à leur périphérie externe par une paroi sensiblement cylindrique 50c.

La paroi avant 50a forme un des flancs, à savoir le flanc arrière, et la paroi arrière 50b est reliée à l'organe 24.

La paroi 50c comprend une rangée annulaire d'orifices 53 traversants en direction radiale. Ces orifices ont pour fonction de permettre l'évacuation de l'huile, et d'éviter de piéger des poches d'huile par centrifugation, ce qui pourrait notamment causer du balourd.

La paroi 50c comprend en outre un cordon annulaire 54 d'équilibrage qui est formé en saillie sur sa surface cylindrique externe. Ce cordon est avantageusement réalisé afin d'autoriser une modification de sa géométrie par usinage en vue de corriger un éventuel balourd du porte-satellites. Dans le cas où le porte-satellites serait réalisé par usinage d'un bloc de matière, le cordon serait formé in situ et serait usiné postérieurement en fonction d'un balourd constaté et à corriger. La position du cordon sur le plus grand diamètre du porte-satellites permet de corriger le balourd avec un minimum d'enlèvement de matière. Le cordon est ici positionné sur le flanc arrière 30 mais il pourrait l'être sur le flanc avant 28.

L'anneau 50 a un diamètre interne D1 égal à un diamètre interne D2 d'un alésage interne 56 de l'organe 24. Autrement dit, les parois annulaires 50a, 50b ont un diamètre interne égal au diamètre interne de l'alésage 56.

Selon l'invention, l'anneau 50 a de plus un diamètre externe D3 égal au diamètre externe maximal D4 des pontets.

Chaque pontet 32 définit entre ses barres 33, 34 deux espaces 60, 62 triangulaires ou trapézoïdaux disposés tête bêche. Les coins de ces espaces peuvent être arrondis concaves. Un premier espace 60 est situé du côté de l'anneau 50 et comporte une base définie par l'anneau 50, et donc orientée vers l'arrière. Un second espace 62 est situé du côté opposé et comporte une base ouverte axialement vers ce côté. L'espace 62 communique avec l'encoche 38 précitée, comme cela est visible aux figures 2 et 4a, 4b.

L'épaisseur radiale E des pontets 32 varie axialement et est maximale (E') au niveau de leur liaison aux flancs 28, 30.

Les figures 4a à 7b illustrent plusieurs paramètres dimensionnels optimisés pour un exemple particulier de réalisation de l'invention.

La figure 4a montre que les sièges 36 du flanc 28 ont un plus grand diamètre que celui des sièges du flanc 30. Les sièges 36 du flanc 30 sont visibles à travers ceux du flanc 28 aux figures 4a et 4b. Le flanc 28 reçoit au niveau de chaque siège un couvercle annulaire non représenté. Les sièges 36 sont entourées par des portions annulaires 36b dont l'épaisseur est déterminée pour conférer une certaine souplesse dans cette zone. Ces portions 36b sont bordées par les encoches 38, 39 et comprennent des orifices de montage de vis pour la tenue des couvercles.

La figure 4b montre que les portions 36b du flanc sont reliées entre elles par les bandes de matière 36c s'étendant entre les encoches 38, 39, et plus précisément entre les pointes ou fonds de ces encoches. Ces bandes 36c peuvent également comprendre une zone amincie et de plus grande souplesse formée par exemple par un trou borgne 66 de diamètre prédéterminé, réalisé sur la face avant du flanc.

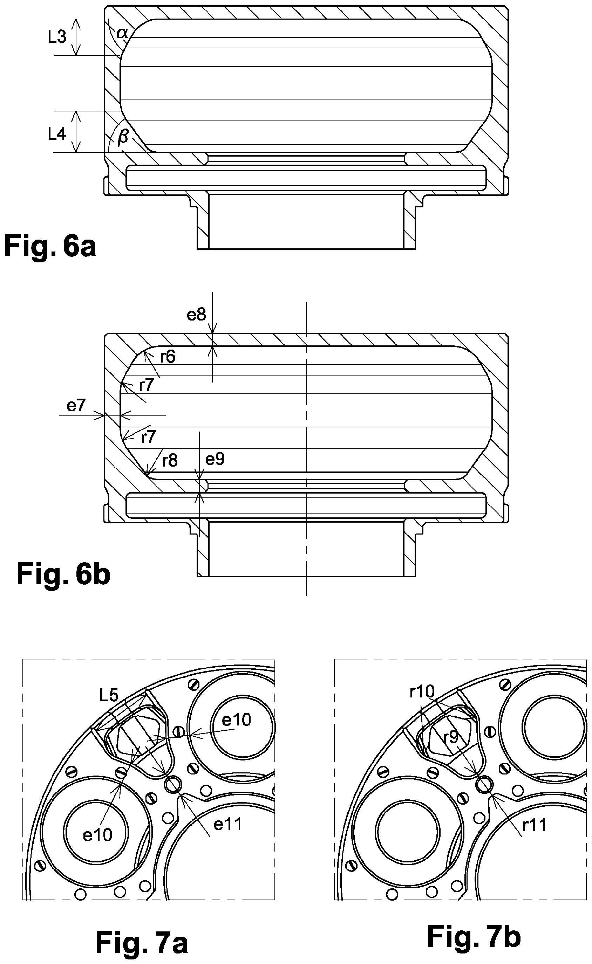

Les figures 6a et 6b sont des vues schématiques en coupe du porte-satellites obtenu suite à tournage et avant son usinage en particulier pour la réalisation des pontets. Ces figures permettent notamment d'apprécier l'épaisseur de la pièce dans plusieurs zones ainsi que les rayons et angles de raccordement de portions des pontets.

Parmi les paramètres optimisés, on trouve par exemple des longueurs ou distances notées L, des épaisseurs notées e, des rayons notés r, des angles notés α, β, γ, etc.

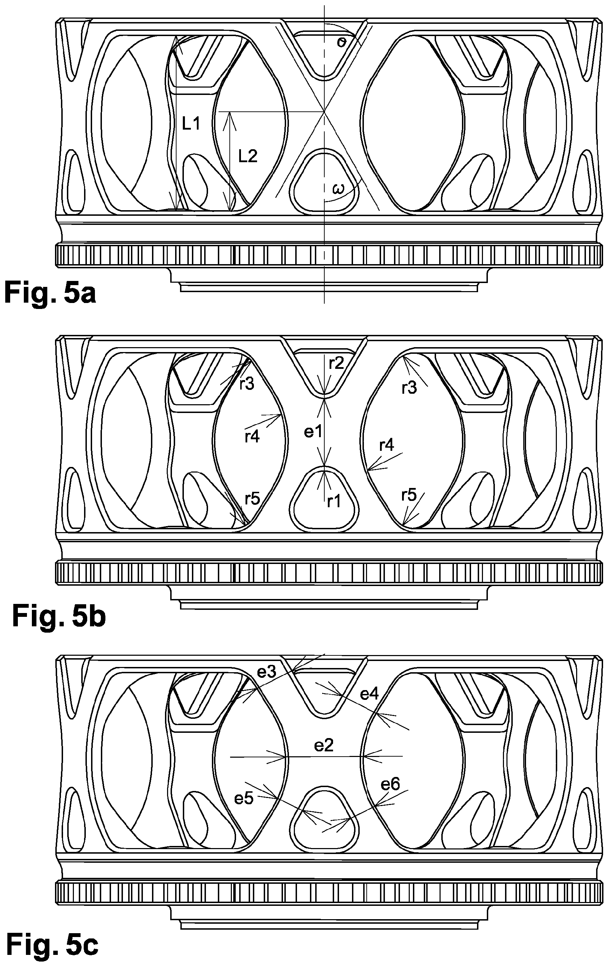

En référence à la figure 5a : 5° < ω < 80° ; 5° < θ < 80° ; et 1 < L₁/L₂ < 20.

En référence à la figure 5b : 1mm < r₁ < 50mm ; 1mm < r₂ < 50mm ; 1mm < r₃ < 50mm ; 1mm < r₄ < 80mm ; et 1mm < r₅ < 50mm.

En référence aux figures 5a et 5b : 1 < L₁/e₁ < 30.

En référence aux figures 5b et 5c : 0,05 < e₂/e₁ < 20.

En référence à la figure 5c : 0,1 < e₂/e₃ < 30 ; 0,1 < e₂/e₄ < 30 ; 0,1 < e₂/e₅ < 30 ; et 0,1 < e₂/e₆ < 30.

En référence aux figures 5a et 6a : 1 < L₁/L₃ < 30 et 1 < L₁/L₄ < 30.

En référence à la figure 6a : 5° < α < 90° et 5° < β < 90°.

En référence à la figure 6b : 1mm < r₆ < 50mm ; 1mm < r₇ < 50mm ; 1mm < r₈ < 50mm ; 1mm < r₉ < 50mm ; 1mm < r₁₀ < 50mm ; et 1mm < r₁₁ < 50mm.

En référence aux figures 5b, 5c, 6b et 7a : 0,1 < e₂/e₇ < 30 ; 0,1 < e₁/e₈ < 30 ; 0,1 < e₁/e₉ < 30 ; 0,02 < e₁₀/e₈ < 50 ; 0,02 < e₁₁/e₈ < 50 ; et 0,02 < L₅/e₂ < 50.

## Revendications

1. Porte-satellites (18) pour un réducteur de vitesse à train épicycloïdal (10), le porte-satellites (18) comportant un organe de transmission de couple (24) d'axe longitudinal A et une cage annulaire (26) s'étendant autour de l'axe A et reliée à une extrémité longitudinale de l'organe (24), ladite cage (26) comprenant deux flancs (28, 30) s'étendant radialement par rapport à l'axe A et reliés par des pontets (32), des sièges (36) s'étendant axialement entre les flancs (28, 30) et étant destinés à supporter des satellites (20) montés de façon rotative autour des sièges (36), où lesdits pontets (32) comprennent des barres (33, 34) entrecroisées en X et dont les extrémités situées du côté dudit organe sont reliées audit organe par un anneau (50) qui s'étend autour dudit axe A **caractérisé en ce que** cet anneau a un diamètre externe (D3) égal à un diamètre externe (D4) maximal desdits pontets (32), et **en ce que** cet anneau comporte une gorge annulaire (52) continue qui débouche radialement vers l'intérieur par rapport audit axe A.

2. Porte-satellites (18) selon la revendication précédente, dans lequel ledit anneau (50) a en demi section axiale une forme en U et comprend deux parois annulaires (50a, 50b) coaxiales et parallèles et reliées à leur périphérie externe par une paroi (50c) cylindrique.

3. Porte-satellites (18) selon la revendication précédente, dans lequel une première (50a) desdites parois annulaires forme un desdits flancs (30) et l'autre (50b) desdites parois annulaires est reliée audit organe (24).

4. Porte-satellites (18) selon la revendication 2 ou 3, dans lequel ladite paroi cylindrique (50c) comprend une rangée annulaire d'orifices (53) traversants.

5. Porte-satellites (18) selon l'une des revendications 2 à 4, dans lequel ladite paroi cylindrique (50c) comprend un cordon annulaire (54) d'équilibrage qui est formé en saillie sur sa surface cylindrique externe.

6. Porte-satellites (18) selon la revendication précédente, dans lequel ladite surface cylindrique externe est la surface cylindrique externe de plus grand diamètre de ladite paroi cylindrique (50c).

7. Porte-satellites (18) selon l'une des revendications 2 à 6, dans lequel ledit anneau (50) a un diamètre interne (D1) égal à un diamètre interne (D2) d'un alésage interne (56) dudit organe (24), ou lesdites parois annulaires (50a, 50b) ont un diamètre interne (D1) égal au diamètre interne (D2) dudit alésage.

8. Porte-satellites (18) selon l'une des revendications précédentes, dans lequel chacun desdits pontets (32) définit entre ses barres (33, 34) deux espaces (60, 62) triangulaires ou trapézoïdaux disposés tête bêche, un premier (60) desdits espaces étant situé du côté dudit anneau (50) et comportant une base définie par ledit anneau, et un second (62) desdits espaces étant situé du côté opposé et comportant une base ouverte axialement vers ce côté.

9. Porte-satellites (18) selon la revendication précédente, dans lequel ledit second espace (62) communique avec une première encoche (38) prévue à la périphérie externe du flanc (28) opposé audit organe (24), cette première encoche ayant une forme générale en V dont la pointe est orientée radialement vers l'axe (A) et orientée vers la pointe d'une seconde encoche (39) en V disposée de manière tête bêche à la périphérie interne du même flanc (28).

10. Réducteur de vitesse à train épicycloïdal (10) comportant un porte-satellites (18) selon l'une quelconque des revendications précédentes.

11. Turbomachine d'aéronef comportant un réducteur à train épicycloïdal (10) selon la revendication précédente.

## Patentansprüche

1. Planetenträger (18) für ein epizyklisches Untersetzungsgetriebe (10), wobei der Planetenträger (18) ein Drehmomentübertragungsorgan (24) von Längsachse A und einen ringförmigen Käfig (26), der sich um die Achse A erstreckt und mit einem Längsende des Organs (24) verbunden ist, umfasst, wobei der Käfig (26) zwei Flanken (28, 30) umfasst, die sich in Bezug auf die Achse A radial erstrecken und über Brücken (32) verbunden sind, Sitze (36), die sich axial zwischen den Flanken (28, 30) erstrecken und dazu vorgesehen sind, Planeten (20) zu stützen, die auf drehbare Weise um die Sitze (36) angebracht sind, wobei die Brücken (32) Balken (33, 34) umfassen, die X-förmig überkreuzt sind und deren Enden, die sich auf der Seite des Organs befinden, durch einen Ring (50), der sich um die Achse A erstreckt, mit dem Organ verbunden sind, **dadurch gekennzeichnet, dass** dieser Ring einen Außendurchmesser (D3) gleich einem maximalen Außendurchmesser (D4) der Brücken (32) aufweist und dadurch, dass dieser Ring eine durchgehende ringförmige Nut (52) umfasst, die in Bezug auf die Achse A radial in die Innenseite mündet.

2. Planetenträger (18) nach dem vorstehenden Anspruch, wobei der Ring (50) im axialen Querschnitt eine U-förmige Form aufweist und zwei ringförmige Wände (50a, 50b) umfasst, die koaxial und parallel sind und an ihrem Außenumfang durch eine zylindrische Wand (50c) verbunden sind.

3. Planetenträger (18) nach dem vorstehenden Anspruch, wobei eine erste (50a) der ringförmigen Wände eine der Flanken (30) bildet und die andere (50b) der ringförmigen Wände mit dem Organ (24) verbunden ist.

4. Planetenträger (18) nach Anspruch 2 oder 3, wobei die zylindrische Wand (50c) eine ringförmige Reihe von Durchgangsöffnungen (53) umfasst.

5. Planetenträger (18) nach einem der Ansprüche 2 bis 4, wobei die zylindrische Wand (50c) ein ringförmiges Band (54) zur Ausbalancierung umfasst, das hervorstehend auf ihrer zylindrischen Außenfläche gebildet ist.

6. Planetenträger (18) nach dem vorstehenden Anspruch, wobei die zylindrische Außenfläche die zylindrischen Außenfläche mit dem größten Durchmesser der zylindrischen Wand (50c) ist.

7. Planetenträger (18) nach einem der Ansprüche 2 bis 6, wobei der Ring (50) einen Innendurchmesser (D1) gleich einem Innendurchmesser (D2) einer Innenbohrung (56) des Organs (24) aufweist, oder die ringförmigen Wände (50a, 50B) einen Innendurchmesser (D1) gleich einem Innendurchmesser (D2) der Bohrung aufweisen.

8. Planetenträger (18) nach einem der vorstehenden Ansprüche, wobei jede der Brücken (32) zwei dreieckige oder trapezförmige Räume (60, 62), die antiparallel angeordnet sind, zwischen ihren Balken (33, 34) definiert, wobei ein erster (60) der Räume sich auf der Seite des Rings (50) befindet und eine von dem Ring definierte Basis umfasst und ein zweiter (62) der Räume sich auf der gegenüberliegenden Seite befindet und eine axial zu dieser Seite geöffnete Basis umfasst.

9. Planetenträger (18) nach dem vorstehenden Anspruch, wobei der zweite Raum (62) mit einer ersten Einkerbung (38) in Verbindung steht, die am Außenumfang der dem Organ (24) gegenüberliegenden Flanke (28) vorgesehen ist, wobei diese erste Einkerbung eine allgemeine V-förmige Form aufweist, deren Spitze radial zur Achse (A) ausgerichtet ist und zur Spitze einer V-förmigen zweiten Einkerbung (39) ausgerichtet ist, die auf antiparallele Weise am Innenumfang der gleichen Flanke (28) angeordnet ist.

10. Epizyklisches Untersetzungsgetriebe (10), umfassend einen Planetenträger (18) nach einem der vorstehenden Ansprüche.

11. Turbomaschine eines Luftfahrzeugs, umfassend ein epizyklisches Untersetzungsgetriebe (10) nach dem vorstehenden Anspruch.

## Claims

1. A planet carrier (18) for an epicyclic speed reduction gear (10), the planet carrier (18) comprising a torque transmission member (24) having a longitudinal axis A and an annular cage (26) extending around the axis A and connected to a longitudinal end of the member (24), said cage (26) comprising two flanks (28, 30) extending radially with respect to the axis A and connected by bridges (32), seats (36) extending axially between the flanks (28, 30) and being intended for supporting planet gears (20) mounted rotatably around the seats (36), wherein said bridges (32) comprise bars (33, 34) which cross one another in the shape of X and of which the ends located on the side of said member are connected to said member by a ring (50) which extends around said axis A **characterized in that** this ring has an outer diameter (D3) equal to a maximum outer diameter (D4) of said bridges (32), wherein this ring comprises a continuous annular channel (52) opening radially inwards with respect to said axis A.

2. The planet carrier (18) according to the preceding claim, wherein said ring (50) is U-shaped in axial half-section and comprises two coaxial and parallel annular walls (50a, 50b) connected at their outer periphery by an cylindrical wall (50c).

3. The planet carrier (18) according to the preceding claim, wherein a first (50a) of said annular walls forms one of said flanks (30) and the other (50b) of said annular walls is connected to said member (24).

4. The planet carrier (18) according to claim 2 or 3, wherein said cylindrical wall (50c) comprises an annular row of through orifices (53).

5. The planet carrier (18) according to any one of claims 2 or 4, wherein said cylindrical wall (50c) comprises an annular balancing bead (54) which is protrudingly formed on its outer cylindrical surface.

6. The planet carrier (18) according to the preceding claim, wherein said outer cylindrical surface is the outer cylindrical surface with the largest diameter of said cylindrical wall (50c).

7. The planet carrier (18) according to one of the claims 2 to 6, wherein said ring (50) has an inner diameter (D1) equal to an inner diameter (D2) of an inner bore (56) of said member (24), or said annular walls (50a, 50b) have an inner diameter (D1) equal to the inner diameter (D2) of said bore.

8. The planet carrier (18) according to any one of the preceding claims, wherein each of said bridges (32) defines between its bars (33, 34) two triangular or trapezoidal spaces (60, 62) arranged head-to-tail with respect to each other, a first (60) of said spaces being situated on the side of said ring (50) and comprising a base defined by said ring, and a second (62) of said spaces being situated on the opposite side and comprising a base open axially towards this side.

9. The planet carrier (18) according to the preceding claim, wherein said second space (62) communicates with a first notch (38) provided on the outer periphery of the flank (28) opposite to said member (24), this first notch having a general shape of a V, the tip of which is oriented radially towards the axis (A) and oriented towards the tip of a second notch (39) in the shape of a V arranged in a head-to-tail manner on the inner periphery of the same flank (28).

10. An epicyclic speed reduction gear (10) comprising a planet carrier (18) according to any one of the preceding claims.

11. An aircarft turbomachine, comprising an epicyclic reduction gear (10) according to the preceding claim.
